Europäisches Patentamt

European Patent Office

Office européen des brevets

(19)

(11) Numéro de publication : **0 073 696**
**B1**

(12)                    FASCICULE DE BREVET EUROPÉEN

(45) Date de publication du fascicule du brevet :
28.05.86

(51) Int. Cl.⁴ : **F 16 H 23/08**

(21) Numéro de dépôt : 82401416.1

(22) Date de dépôt : 29.07.82

(54) Mécanisme de transformation d'un nouvement.

(30) Priorité : 30.07.81 FR 8114898

(43) Date de publication de la demande :
09.03.83 Bulletin 83/10

(45) Mention de la délivrance du brevet :
28.05.86 Bulletin 86/22

(84) Etats contractants désignés :
AT BE CH DE FR GB IT LI LU NL SE

(56) Documents cités :
DE-A- 2 306 160
DE-C-   122 382
FR-A-   414 647
FR-A-   597 547
FR-A- 2 078 662
FR-A- 2 271 459
FR-A- 2 365 055
FR-A- 2 453 332
US-A- 1 814 946
US-A- 2 634 178

(73) Titulaire : **CREUSOT-LOIRE**
**42 rue d'Anjou**
**F-75008 Paris (FR)**

(72) Inventeur : **Pere, Gérard**
**6 rue d'Essertenne**
**F-71670 Le Breuil (FR)**

(74) Mandataire : **Bressand, Georges et al**
**c/o CABINET LAVOIX 2 Place d'Estienne d'Orves**
**F-75441 Paris Cedex 09 (FR)**

EP 0 073 696 B1

Jouve, 18, rue St-Denis, 75001 Paris, France

## Description

L'invention a pour objet un mécanisme de transformation d'un mouvement de rotation en un mouvement rectiligne de va et vient susceptible par exemple de commander une pluralité d'éléments mobiles disposés symétriquement autour d'un axe longitudinal. L'invention s'applique spécialement à la commande de pompes à pistons axiaux comprenant une pluralité de cylindres disposés symétriquement autour d'un axe et à l'intérieur desquels se déplacent alternativement des pistons reliés par des bielles à un plateau oscillant animé d'un mouvement de nutation autour d'un centre d'oscillation placé sur l'axe longitudinal.

A cet effet, le plateau est articulé autour du centre d'oscillation et il est muni d'un maneton, dirigé suivant une direction passant par le centre d'oscillation et inclinée par rapport à l'axe longitudinal, et entraîné en rotation autour de cet axe. Le mouvement de rotation du maneton dont l'axe décrit un cône ayant pour sommet le centre d'oscillation détermine un mouvement de nutation du plateau sur lequel s'appuient de façon articulée les bielles de commande des pistons qui sont ainsi animés d'un mouvement de va et vient. Le mécanisme est réversible, le mouvement des pistons pouvant déterminer un mouvement de rotation du maneton et par conséquent du plateau sur lequel il est articulé.

Bien entendu, il est nécessaire que le centre d'oscillation soit fixe, le plateau étant articulé sur un carter sur lequel sont montés d'un côté les cylindres et de l'autre le mécanisme d'entraînement en rotation du maneton.

L'articulation du plateau oscillant sur le carter peut se faire de différentes façons et par exemple autour d'une rotule centrée sur le centre d'oscillation. Cependant, surtout dans les pompes de grandes dimensions et de fortes puissances, la réalisation d'une articulation à rotules sphériques susceptibles de résister aux efforts développés est difficile et coûteuse.

C'est pourquoi, pour simplifier le dispositif, on a déjà proposé de remplacer la rotule par une articulation à la Cardan. La société déposante a décrit dans le brevet français FR-A-2 271 459, déposé le 9 novembre 1973, un montage de ce type dans lequel l'articulation à la Cardan est constituée par une traverse montée tourillonnante autour d'un axe passant par le centre d'oscillation et sur laquelle est articulé le plateau, autour d'un axe de pivotement passant également par le centre d'oscillation et coupant l'axe de tourillonnement de la traverse à angle droit. Le plateau est muni à cet effet de deux parties écartées formant une chape qui coiffe la traverse et sur lesquelles s'appuient les extrémités d'une tige d'assemblage dirigée suivant l'axe de pivotement.

Généralement, pour ce genre de dispositif, le plateau est articulé sur la traverse autour de deux pivots écartés centrés sur l'axe de pivotement et constitués de préférence de paliers à roulement faciles à monter et à entretenir. Cependant, de tels paliers à roulement risquent de mal supporter une telle utilisation car ils sont soumis à des efforts de flexion alternée lors de l'oscillation du plateau.

C'est pourquoi, dans un second brevet FR-A-24 53 332 déposé le 6 avril 1979, la société déposante a décrit une disposition permettant de soumettre l'articulation à un effort de précontrainte dirigé suivant l'axe de pivotement et appliqué sur la tige d'assemblage, par exemple au moyen d'un petit vérin placé à l'extrémité de celle-ci et s'appuyant sur le plateau. On utilise de préférence des roulements coniques dont les cages extérieures sont calées dans un logement central cylindrique ménagé sur la traverse dans l'axe de pivotement et dont les cages internes reprennent l'effort de précontrainte en s'appuyant vers l'extérieur sur les deux parties de la chape et vers l'intérieur, l'une sur l'autre, par l'intermédiaire d'une bague entretoise disposée entre elles.

Jusqu'à présent, et notamment dans le brevet FR-A-24 53 332 on avait cherché à écarter le plus possible les deux paliers à roulement et la bague entretoise qui avait de ce fait une largeur assez importante et pouvait avoir tendance à flamber. D'autre part, il faut prévoir le remplacement possible sur le site des parties sensibles du mécanisme et notamment de l'articulation et par conséquent simplifier autant que possible le montage de l'ensemble.

La présente invention a pour objet une nouvelle disposition permettant d'une part de mieux résister aux efforts de flexion alternée et d'autre part de simplifier considérablement le montage de l'articulation.

Conformément à l'invention, on empile sur toute la hauteur du logement de la traverse un nombre pair de roulements coniques dont les centres de charge sont écartés symétriquement de part et d'autre du centre d'oscillation et dont les cages internes sont emmanchées sur une douille cylindrique elle-même emmanchée sans jeu sur la tige d'articulation et s'étendant sur tout l'espace compris entre les deux parties de la chape, et lesdites cages internes se répartissent sur toute la longueur de la douille en laissant entre elles des intervalles dans lesquels sont interposées des bagues entretoises dont l'épaisseur est ajustée de telle sorte que l'effort de précontrainte appliqué par la tige se répartisse également entre les roulements et provoque au moins un rattrapage complet des jeux par déformation radiale élastique des cages, les cages internes s'appliquant sur la douille et les cages externes sur la paroi cylindrique du logement de la traverse.

Selon une caractéristique importante, la longueur de la douille cylindrique et les épaisseurs des bagues entretoises sont déterminées de telle sorte que la douille prenne appui à ses extrémités sur les deux parties de la chape pour reprendre l'effort de précontrainte dépassant l'effort nécessaire pour le rattrapage des jeux.

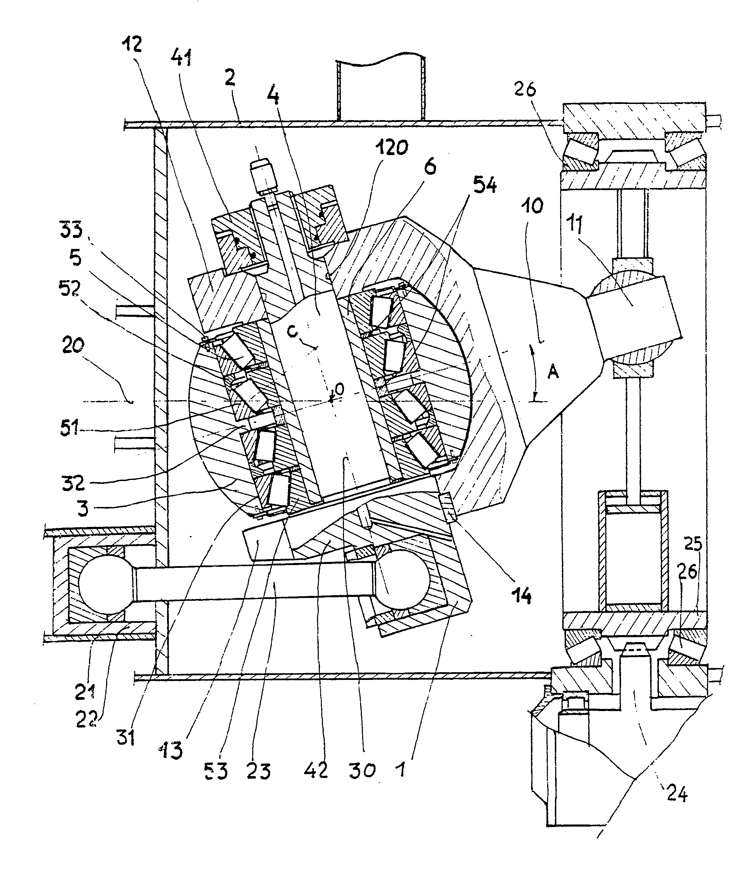

L'invention sera mieux comprise en se référant à un mode de réalisation particulier représenté à titre d'exemple sur le dessin annexé.

La figure unique est une vue en coupe axiale de l'articulation, selon l'invention, d'un plateau oscillant.

Le plateau oscillant 1 est placé à l'intérieur d'un carter 2 centré sur un axe longitudinal 20 passant par le centre d'oscillation 0. D'un côté du centre 0 sont placés les cylindres 21 régulièrement répartis autour de l'axe 20, l'un d'entre eux ayant été représenté en coupe dans le plan de la figure de façon à montrer le piston 22 relié au plateau 1 par une bielle 23 articulée à ses extrémités.

De l'autre côté du centre 0 est monté sur le carter 2 un mécanisme d'entrainement comprenant un pignon 24 qui engrène sur une roue 25 centrée sur l'axe de rotation 20 autour de paliers 26 montés sur le carter. Sur le plateau d'entrainement 25 est articulé un maneton 11 centré sur un axe 10 passant par le centre d'oscillation 0 et incliné par rapport à l'axe 20 d'un angle A qui peut éventuellement être réglé par déplacement radial du maneton 11 pour modifier la course des pistons 22 et par conséquent le débit lorsque ceux-ci constituent une pompe.

On comprend facilement que, lorsque le pignon 24 entraîne en rotation le plateau 25 et par conséquent le maneton 11, l'axe 10 décrit un cône ayant pour sommet le centre d'oscillation 0 autour duquel le plateau 1 est animé d'un mouvement de nutation.

L'articulation à la Cardan du plateau 1 est constituée par une traverse 3 montée tourillonnante sur le carter 2 autour d'un axe perpendiculaire au plan de la figure et passant par le centre d'oscillation 0. Le pivot est monté à l'intérieur d'un logement central de la traverse 3 limité par une paroi cylindrique 31 dont l'axe 30 passe par le centre 0 et est perpendiculaire d'une part à l'axe de tourillonnement de la traverse et d'autre part à l'axe 10 du maneton 11.

Le pivot est constitué essentiellement par une tige 4 dont les extrémités 41 et 42 s'appuient respectivement sur deux parties 12 et 13 du plateau formant une chape qui coiffe le logement central 31 de la traverse 3.

Le pivotement est assuré par des roulements coniques disposés dans le logement 31 et centrés sur la tige 4.

De façon analogue à celle décrite dans le brevet FR-A-2453332 la tige 4 porte une extrémité 42 rendue solidaire de la partie 13 du plateau et qui supporte l'articulation à rotule de la bielle 23. L'autre extrémité de la tige 4 passe par un alésage 120 ménagé dans l'autre partie 12 du plateau et est munie d'un filetage sur lequel engrène un écrou de serrage 41. D'une façon déjà décrite dans le brevet précédent, l'écrou de serrage peut constituer un petit vérin déterminant une tension de précontrainte de la tige qui est appliquée sur les roulements. La caractéristique essentielle de l'invention réside dans le montage des roulements et la manière dont l'effort de précontrainte leur est appliqué.

En effet, au lieu d'utiliser, de façon classique, seulement deux roulements coniques écartés autant que possible l'un de l'autre, on empile une pluralité de roulements identiques pratiquement sur toute la hauteur du logement 31 de la traverse 3. Ainsi, dans l'exemple représenté, on a empilé quatre roulements 5 dont les cages externes 51 ont un diamètre extérieur égal au diamètre interne de la paroi cylindrique 31 de façon à s'emmancher à glissement dans celle-ci. Des bagues entretoises 52 sont interposées entre les cages externes 51 et ont une hauteur telle que l'ensemble des roulements s'étend sur une hauteur égale à celle du logement 31 aux extrémités duquel sont placées des brides 33 de fixation de l'ensemble. Par ailleurs, on utilise des roulements coniques dont les centres de charge effectifs C sont écartés symétriquement vers l'extérieur de part et d'autre du centre d'oscillation 0. Le montage des roulements peut s'effectuer avant la pose du plateau de part et d'autre de la traverse 3 et c'est pourquoi la bague entretoise placée au centre de l'articulation peut être constituée par une portée d'appui annulaire 32 solidaire de la traverse 3.

Les cages internes 53 des roulements sont emmanchées à glissement sur une douille cylindrique 6 qui est elle-même emmanchée sans jeu sur la tige d'articulation 4 et s'étend sur tout l'espace compris entre les deux parties 12 et 13 de la chape du plateau.

Le nombre et les dimensions des roulements sont choisis de telle sorte que ceux-ci soient répartis régulièrement le long de la bague 6 et que l'ensemble des cages internes 53 couvre pratiquement toute la longueur de la douille 6. Dans les intervalles entre les cages internes 33 sont placées des bagues entretoises 54 qui, de préférence, sont également emmanchées à glissement sur la douille 6 de façon que l'ensemble des cages internes 53 et des bagues entretoises 54 couvre la totalité de la longueur de la douille.

On voit que, grâce à cette disposition, l'effort de précontrainte appliqué sur la tige 4 peut être repris d'une part par la douille 6 et d'autre part par l'ensemble de l'empilage des cages internes 53 et des bagues entretoises 54. C'est pourquoi cet empilage à une hauteur légèrement supérieure à la longueur de la douille 6 de façon que l'effort de précontrainte soit repris en premier lieu par les roulements.

Du fait que l'on utilise des roulements coniques, cet effort de serrage des cages internes 53 détermine une déformation radiale élastique des roulements, les cages internes 53 s'appliquant vers l'intérieur contre la paroi de la douille 6 et les cages externes 51 s'appliquant vers l'extérieur contre la paroi cylindrique 31 du logement central de la traverse 3.

A partir des mesures géométriques des roulements, du logement 31 et de la douille 6, il est possible de calculer les déformations radiales des roulements et de la traverse dues à l'effort axial et d'ajuster les épaisseurs des bagues entretoises 54 de façon que la charge se répartisse également entre les roulements dont toutes les cages sont appliquées vers l'extérieur sur la traverse 3 et vers l'intérieur sur la douille 6.

De la sorte, on peut rattraper tous les jeux radiaux entre les cages, la douille 6 et le logement 31, ce qui est particulièrement important pour encaisser les flexions alternées appliquées sur l'articulation.

D'autre part, ayant ainsi calculé les déformations radiales et l'écrasement axial de l'empilage des roulements, on peut donner à la douille 6 une longueur égale à la hauteur totale de l'empilage des cages internes 53 et des bagues entretoises 54 diminuée de l'écrasement permettant de rattraper les jeux. Ainsi, on peut exercer sur la tige 4 une tension de précontrainte supérieure à celle nécessaire pour le rattrapage des jeux puisque l'effort axial supplémentaire est repris à ce moment par la douille 6. La tige 4 ainsi précontrainte résiste mieux aux flexions alternées.

Par ailleurs, selon une autre caractéristique essentielle, la partie de la tige 4 comprise entre les deux parties 12 et 13 du plateau est entièrement couverte sans jeu par la douille 6 dont la paroi extérieure est elle-même entièrement recouverte par l'empilage des roulements et des bagues entretoises 54 qui exercent sur elle des efforts d'application radiaux. On élimine ainsi tout risque de flambement de la tige et de la douille.

Mais l'utilisation, selon l'invention, d'une douille intermédiaire de longueur égale à l'espace entre les deux branches de la chape présente aussi l'avantage de simplifier considérablement le montage de l'articulation. En effet, la traverse 3 étant montée sur son axe de tourillonnement sur le carter, il est possible tout d'abord de placer les roulements l'un après l'autre dans le logement 31, de part et d'autre de la portée annulaire 32, en interposant les bagues entretoises 52 et 54 puis en fixant l'ensemble par les brides 33. On enfile alors la douille 6 et l'on coiffe l'ensemble par la chape formée des deux parties 12 et 13 du plateau. Il ne reste plus qu'à enfiler sur le plateau et sur la douille la tige 4, dont la pièce de support 42 est montée coulissante dans un alésage ménagé sur la partie 13 du plateau par rapport à laquelle elle est bloquée par une clavette 14. L'ensemble est serré par l'écrou 41, le plateau étant ainsi monté sur son articulation et pouvant recevoir les têtes des bielles 23.

Grâce à un tel montage, on a pu en atelier réaliser l'ajustage des bagues entretoises 54 de façon à obtenir l'écrasement axial déterminant la déformation radiale voulue.

Ce montage très simple permet non seulement d'abaisser le coût de l'articulation mais également facilite le remplacement des pièces les plus soumises à usure.

Bien entendu, l'invention ne se limite pas au seul mode de réalisation qui vient d'être décrit et dont on pourrait imaginer d'autres variantes en utilisant des moyens équivalents.

## Revendications

1. Mécanisme de transformation d'un mouvement de rotation en un mouvement rectiligne de va et vient comportant un plateau oscillant (1), articulé autour d'un axe de pivotement (30) sur une traverse d'appui (3) montée tourillonnante sur un carter fixe (2) autour d'un axe coupant à angle droit l'axe de pivotement du plateau (1) en un centre d'oscillations (0), le plateau (1) comportant deux parties écartées (12 et 13) formant une chape coiffant la traverse (3) et sur lesquelles prennent appui les deux extrémités d'une tige d'assemblage (4) alignée sur l'axe de pivotement (30) et passant dans un logement central (31) de la traverse (3) limité par une paroi interne cylindrique de révolution autour de l'axe de pivotement (30) sur laquelle sont calées les cages externes de roulements coniques (5) centrés sur l'axe de pivotement, la tige d'assemblage (4) étant soumise à un effort axial de précontrainte repris par les cages internes des roulements (5) qui s'appuient, dans le sens axial, vers l'extérieur sur les deux parties (12, 13) de la chape et vers l'intérieur, sur une bague entretoise interposée entre elles, caractérisé par le fait que sur toute la hauteur·du logement (31) de la traverse (3) sont empilés un nombre pair de roulements coniques (5) identiques dont les centres de charge sont écartés symétriquement de part et d'autre du centre d'oscillation (0) et dont les cages internes (53) sont emmanchées sur une douille cylindrique (6) elle-même emmanchée sans jeu sur la tige d'assemblage (4) et s'étendant sur tout l'espace compris entre les deux parties (12 et 13) de la chape, lesdites cages internes (53) se répartissant sur toute la longueur de la douille (6) en laissant entre elles des intervalles dans lesquels sont interposées des bagues entretoises (54) dont l'épaisseur est ajustée de telle sorte que l'effort de précontrainte appliqué par la tige (4) se répartisse également entre les roulements (5) et provoque au moins un rattrapage complet des jeux par déformation radiale élastique des cages, les cages internes (53) s'appliquant sur la douille et les cages externes (51) sur la paroi cylindrique du logement (31) de la traverse (3).

2. Mécanisme de transformation de mouvement selon la revendication 1, caractérisé par le fait que la longueur de la douille cylindrique (6) et les épaisseurs des bagues entretoises (54) sont déterminées de telle sorte que la douille (6) prenne appui à ses extrémités sur les deux parties (12, 13) de la chape pour reprendre l'effort de précontrainte dépassant l'effort nécessaire pour le rattrapage des jeux.

3. Mécanisme de transformation de mouvement selon l'une des revendications 1 et 2, caractérisé par le fait qu'il comprend au moins quatre roulements (5) empilés.

4. Mécanisme de transformation de mouvement selon l'une des revendications 1, 2, 3, caractérisé par le fait que les bagues entretoises (54) interposées entre les cages internes sont emmanchées sans jeu sur la douille cylindrique (6).

5. Mécanisme de transformation de mouvement selon la revendication 1, caractérisé par le fait que des bagues entretoises (52) sont interposées entre les cages externes (51) des roulements (5) pour former avec celles-ci un empilage calé sur la traverse (3) le long de la paroi cylindrique du logement central (31).

**Claims**

1. Mechanism for converting a rotary motion into a rectilinear to-and-fro motion comprising an oscillating plate (1) articulated around a pivoting shaft (30) on a supporting cross-member (3) journalled in a fixed housing for rotation about an axis intersecting at a right angle the pivot axis of the plate (1) at an oscillation centre (0), the plate (1) comprising two spaced-apart portions (12 and 13) forming a yoke capping the cross-member (3) and on which are supported the two ends of an assembling rod (4) aligned on the pivot shaft (30) and extending into a central cavity (31) of the cross-member (3) defined by an inner cylindrical wall of revolution about the pivot shaft (30) on which are fixed the outer conical rolling bearing cages (5) centered on the pivot shaft, the assembling rod (4) being subjected to a pre-stessing axial force taken up by the inner cages of the rolling bearings (5) which bear outwardly in the axial direction against the two portions (12, 13) of the yoke and inwardly against a spacer ring interposed therebetween, characterised in that there are stacked throughout the height of the cavity (31) of the cross-member (3) an even number of conical rolling bearings (5) which are identical and whose load centres are symmetrically spaced on each side from the pivot centre (0) and whose inner cages (53) are fitted on a cylindrical bush (6) itself fitted without clearance on the assembling rod (4) and extending throughout the space between the two portions (12, 13) of the yoke, said inner cages (53) being distributed throughout the length of the bush (6) and defining therebetween gaps in which are interposed spacer rings (54) whose thickness is so adjusted that the pre-stressing force applied by the rod (4) is equally distributed between the rolling bearings (5) and produces at least one complete taking up of the clearances by elastic radial deformation of the cages, the inner cages (53) being applied against the bush and the outer cages (51) being applied against the cylindrical wall of the cavity (31) in the cross-member (3).

2. Mechanism for converting motion according to claim 1, characterised in that the length of the cylindrical bush (6) and the thicknesses of the spacer rings (54) are so determined that the bush (6) bears at its ends against the two portions (12, 13) of the yoke for taking up the prestressing force exceeding the force required for taking up the clearances.

3. Mechanism for converting motion according to claim 1 or 2, characterised in that it comprises at least four stacked rolling bearings (5).

4. Mechanism for converting motion according to one of the claims 1, 2 and 3, characterised in that the spacer rings (54) interposed between the inner cages are fitted without clearance on the cylindrical bush (6).

5. Mechanism for converting motion according to claim 1, characterised in that spacer rings (52) are interposed between the outer cages (51) of the rolling bearings (5) so as to form with said cages a stack fixed on the cross-member (3) along the cylindrical wall of the central cavity (31).

**Patentansprüche**

1. Vorrichtung zum Umwandeln einer Drehbewegung in hin- und hergehende geradlinige Bewegung, mit einer Taumelscheibe (1), die über eine Drehachse (30) an einem Querträger (3) angelenkt ist, der an einem feststehenden Gehäuse (2) über eine Achse drehbar gelagert ist, die die Drehachse der Taumelscheibe (1) an einem Drehpunkt (0) im rechten Winkel schneidet, wobei die Taumelscheibe (1) zwei voneinander entfernte Teile (12 und 13) aufweist, die einen den Querträger (3) umgreifenden Gabelkopf bilden und an denen die beiden Enden einer Montagestange (4) angreifen, die auf der Drehachse (30) ausgefluchtet ist und durch einen zentralen Sitz (31) des Querträgers (3) hindurchtritt, der durch eine sich um die Drehachse erstreckende zylindrische Innenwand gebildet ist, an der die äußeren Laufringe von Kegelrollenlagern (5) verkeilt sind, die auf der Drehachse zentriert sind, wobei die Montagestange (4) einer axialen Vorspannkraft unterworfen ist, die von den inneren Laufringen der Rollenlager (5) aufgenommen wird, die sich in axialer Richtung nach außen an den beiden Teilen (12, 13) des Gabelkopfs nach innen an einem zwischen ihnen angeordneten Abstandsring abstützen, dadurch gekennzeichnet, daß auf der gesamten Höhe des Sitzes (31) des Querträgers eine gerade Anzahl von identischen Kegelrollenlagern (5) gestapelt ist, deren Belastungsmitten symmetrisch beiderseits des Drehpunkts (0) im Abstand angeordnet sind und deren innere Laufringe (53) auf eine zylindrische Hülse (6) aufgepreßt sind, die ihrerseits ohne Spiel auf die Montagestange (4) aufgesetzt ist und sich auf dem gesamten Raum zwischen den beiden Teilen (12 und 13) des Gabelkopfs erstreckt, wobei sich die inneren Laufringe (53) über die ganze Länge der Hülse (6) erstrecken und untereinander Zwischenräume freilassen, in denen Abstandsringe (54) angeordnet sind, deren Dicke derart eingestellt ist, daß die durch die Stange (4) ausgeübte Vorspannkraft sich auch zwischen den Rollenlagern (5) verteilt und durch elastische radiale Verformung der Laufringe wenigstens eine vollständige Spielbeseitigung herbeiführt, wobei die inneren Laufringe (53) an der Hülse und die äußeren Laufringe (51) an der zylindrischen Wand des Sitzes (31) des Querträgers (3) anliegen.

2. Vorrichtung zum Umwandeln einer Bewegung nach Anspruch 1, dadurch gekennzeichnet, daß die Länge der zylindrischen Hülse (6) und die Dicke der Abstandsringe (54) derart festgelegt sind, daß die Hülse (6) an ihren Enden an den beiden Teilen (12, 13) des Gabelkopfs anliegt, um die Vorspannkraft aufzunehmen, die die für die Spielbeseitigung erforderliche Kraft übersteigt.

3. Vorrichtung zum Umwandeln einer Bewegung nach einem der Ansprüche 1 und 2, dadurch gekennzeichnet, daß sie wenigstens vier aufeinandergestapelte Rollenlager (5) aufweist.

4. Vorrichtung zum Umwandeln einer Bewegung nach einem der Ansprüche 1 und 2, dadurch gekennzeichnet, daß die zwischen den inneren Laufringen angeordneten Abstandsringe (54) ohne Spiel auf die zylindrische Hülse (6) aufgesetzt sind.

5. Vorrichtung zum Umwandeln einer Bewegung nach Anspruch 1, dadurch gekennzeichnet, daß zwischen den äußeren Laufringen (51) der Rollenlager (5) Abstandsringe (52) angeordnet sind, um hiermit längs der zylindrischen Wand des zylindrischen Sitzes (31) einen am Querträger (3) verkeilten Stapel zu bilden.